# EUROPEAN PATENT SPECIFICATION

(11) **EP 1 096 354 B1**
(45) Date of publication and mention of the grant of the patent: **30.11.2005**
(21) Application number: 00610111.7
(22) Date of filing: 27.10.2000
(51) Int. Cl.: G05D 27/00, G05D 23/12

(54) **Water flow regulator**
Wasser-Durchflussregler
Régulateur de débit d'eau

(30) Priority: 29.10.1999 DK 155199
(43) Date of publication of application: 02.05.2001
(73) Proprietor: Danfoss Redan A/S, 8240 Risskov (DK)
(72) Inventor: Faurschou, Jens, 8240 Risskov (DK); Houlberg, Sven, 8240 Risskov (DK); Nielsen, Kent, 8240 Risskov (DK)
(74) Representative: Larsen, Hans Ole

(56) References cited:
- US-A- 2 733 865
- US-A- 2 752 931
- US-A- 3 294 321

## Description

### State of the art

The invention relates to a regulator for a heat exchanger with a thermostatically controlled valve especially for use in a district heating unit where domestic water for a draw off point is heated by heat exchanging with the hot water from the district heating source (district heating water) and comprising a temperature sensor of the kind where liquid pressure through a capillary tube impacts on the thermostatic valve for regulating the flow of the hot water through the heat exchanger in such a manner that the domestic water temperature remains independent of the flow quantity of drawn off domestic water.

Regulators of this kind are generally known and are used wherever a hot medium, such as district heating water, is used for heating domestic water, and where the temperature of the water is regulated by changing the quantity of the supplied hot medium.

An example of such a regulator is known from DOS 23 37 861 describing a thermostatic regulating valve based on a direct transmission of the expansion or contraction of a liquid by heating and cooling, respectively. In the valve there is moreover a built-in safety function which may partly ensure against excess pressure and partly ensure that the valve adjusts itself to a predetermined position in case of a failure of the effect of the sensor liquid.

In these known regulators the thermostatic valve is fully open when no hot domestic water is drawn off. This means that the hot district heating water has access to the heat exchanger which may have various disadvantages, for instance overheating of any remaining domestic water in the heat exchanger which can cause scalding when the next tapping begins.

### Object of the invention

It is the purpose of the invention to overcome these disadvantages and to provide a regulator in which the district heating water is barred from access to the heat exchanger when no domestic water is tapped or drawn off, and where this closure takes place independently of the other functions of the regulator.

According to the invention this is obtained by a regulator configured as disclosed in claim 1.

With the further valve which is controlled by the circulation of cold domestic water leading to the heat exchanger during tapping, it is obtained that the district heating water cannot reach the heat exchanger unless domestic water is drawn off, because the valve bars the access unless water flows to the heat exchanger.

In practice, control of the position of the valve is obtained by the pressure drop from the inlet side to the outlet side of the housing of the regulator, because the valve spindle is connected with a roller diaphragm which is spring loaded in the direction of the closing position of the valve, and the sides of which are impacted on by the pressure on inlet and outlet side, respectively, as disclosed in claim 2. When no domestic water is drawn off, the pressure on the inlet and outlet side of the housing is the same, but with the beginning of each new tapping there will be a pressure drop on the outlet side whereby the diaphragm and thus the valve are caused to open permitting district heating water to flow to the heat exchanger.

By providing the valve spindle with a slide valve, as disclosed in claim 3, a particularly safe opening and closing function for the valve is obtained, because this slide valve uncovers an aperture above which there is a pressure drop between the inlet and the outlet side which together with the spring of the roller diaphragm determines an equilibrium for the valve in its open position.

When the valve spindle extends through a stuffing box in the housing, as disclosed in claim 4, it is obtained that the district heating water will not mix with the cold domestic water.

Claims 5 and 6 disclose expedient details of the operational equipment of the thermostatic valve.

The regulator operates in the following manner:

In its idle position, i.e. when no domestic water is drawn off, the thermostatic valve is open, but the further valve which is controlled by the circulation of cold water is closed so that district heating water cannot flow to the heat exchanger because there is a pressure equilibrium between inlet and outside side for the cold water.

Once water is drawn off, the valve opens, because the flowing water causes a pressure drop between inlet and outlet side. At the same time the slide valve between the inlet and outlet side opens and a state of equilibrium is soon obtained above the two sides of the roller diaphragm between the pressure drop over the aperture of the slide valve and the spring which impacts on the roller diaphragm so that the valve stays open as long as there is a flow of cold water.

The thermostatic valve of the regulator can then control the hot water water in the general manner.

Once the drawing off is stopped, the pressure between inlet and outlet side for the cold water is equalized, and the further valve will prevent access of the district heating water to the heat exchanger. As the thermostatic valve cools it moves back towards a fully open position.

### The drawing

An embodiment of the regulator according to the invention will now be described in further detail in the following with reference to the drawing wherein
- fig. 1: is a section of an embodiment of the regulator,
- fig. 2: is a part section of another embodiment of the regulator,
- fig. 3: is a part section of the thermostatic unit of the regulator.
- fig. 4: is this part of the regulator with the adjusting sleeve in its lower position, and
- fig. 5: is this part of the regulator with the adjusting sleeve in its upper position.

### Description of embodiments

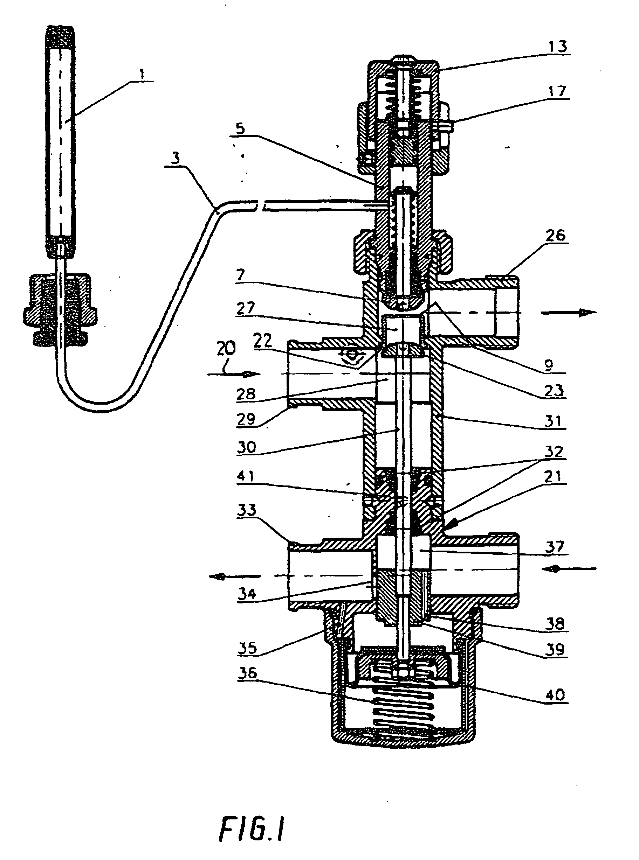

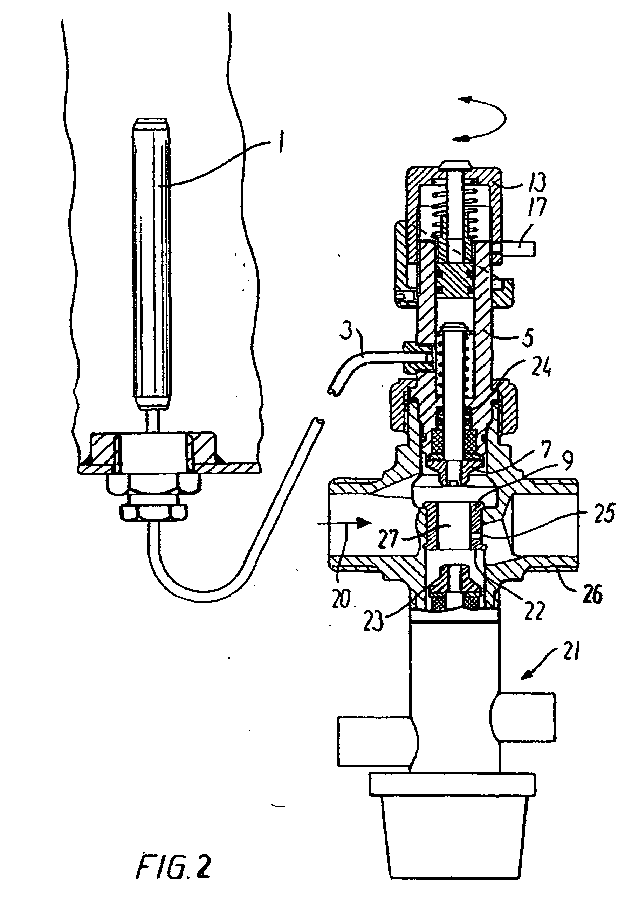

Figs. 1 and 2 show examples of the regulator according to the invention.

The valve 21, which opens when cold water circulates, has a valve body 23 cooperating with a valve seat 22, which is placed opposite the thermostatically controlled valve 7, 9.

In periods of idleness where the heat exchanger is cold, the thermostat is fully open, but since the valve 21 is closed, there is no circulation of the heating medium 20. When hot water is not drawn off, the thermostatic valve 1, 3, 5, 7, 13 and 17 of the regulator is open corresponding to the hot water temperature at the remote sensor 1 of the thermostat, whereas the valve 23, 30, 34, 35, 36, 37, 38, 39 and 40 which is controlled by the circulation is closed.

The cold water slide valve 39 is not designed to keep tight so that the cold water pressure from the supply side of the cold water part may seep past the cold water slide valve 39 until the pressure on either side of the roller diaphragm 40 is equal. Subsequently, the compression spring will ensure that the roller diaphragm 40 and the cold water slide valve 39 is pressed back. This will ensure that the pressure cone 23 of the district heating part 31 is completely shut off.

Where there is circulation of the domestic hot water, it will also be possible to provide a passage through a bore 25 as shown in fig. 2 or similarly in the pressure control regulator for district heating water in such a manner that a limited amount of district heating water, which may keep the circulating water heated, may be allowed to circulate.

When a drawing off of hot water is started, the cold water pressure will disappear from the cold water outlet pipe stub 33 of the regulator and via the pressure bore 35 also on the back of the roller diaphragm 40. In this manner the higher pressure on the front of the roller diaphragm 40 will overcome the compression spring 36 and the regulator will open so that cold water may flow through the cold water part of the regulator.

Since the cold water outlet pipe stub 33 is provided with a diaphragm 34 causing a pressure drop, the regulator will open until there is balance between outlet pressure + spring pressure and the cold water pressure. The cold water slide valve 39 is mounted on the spindle 30 together with the roller diaphragm 40, and at the other end of the spindle 30 the pressure cone 23 of the district heating part 31 is mounted. The cold water chamber 37 and the district heating chamber 28 are separated by two stuffing boxes 32 having a bored discharge 41 to the surroundings therebetween. This will ensure that a defective stuffing box 32 will not cause cold water and district heating water being mixed.

When the cold water slide valve 39 and the roller diaphragm 40 open for the cold water circulation, also the pressure cone 23 of the district heating part 31 will open for district heating circulation. The thermostatic valve 1, 3, 5, 7, 13 and 17 of the district heating part 31 will subsequently take over the control of the hot water temperature. The thermostatic valve 1, 3, 5, 7, 13 and 17 operates such that an increasing temperature in the remote sensor 1 makes the thermostatic cone 23 close against the seat 9, and a decreasing temperature in the remote sensor 1 makes the thermostatic cone 23 withdraw itself from the seat 9 and thereby open for district heating circulation.

When the domestic hot water temperature reaches the predetermined value of the thermostat, the thermostat starts to regulate such that the heating medium and the drawing off temperature are kept at the desired level irrespective of the drawing off volume.

Having stopped the drawing off the pressure control regulator 21 will momentarily shut off the heating medium 20.

After the drawing off also the pressure drop across the cold water diaphragm 34 will disappear. This means that the pressure on the back of the roller diaphragm 40 increases and that the compression spring 36 compresses the roller diaphragm 40 and hence the cold water slide valve 39 back. The also means that the pressure cone 23 of the district heating part 31 will at the same time shut off the district heating circulation such that the district heating circulation 20 ceases without the afterflow which is so characteristic of thermostatic regulators. This will ensure that the domestic hot water in the exchanger is not overheated so that the risk of scalding and/or scaling is avoided.

The sensor 1 cools off relatively quickly after the drawing off, depending of course on the temperature of the surroundings, but after a short period of time the thermostat is cool and the thermostat will then be open.

The result is that the installation may operate effectively without no-load loss and the best possible protection against precipitation of for instance limestone in the heat exchanger.

Since the regulator only allows district heating water to flow through the district heating part 31 of the regulator when hot water is drawn off, it may be necessary to provide the regulator with a by-pass function ensuring that the district heating supply pipe does not get cold since the waiting time for hot water is thereby unnecessarily prolonged. This may take place outside the regulator by providing a thermostatically controlled "short circuit" of the supply and outlet pipes of the district heating. This solution may, if desired, be fitted with a temperature regulation so that the by-pass temperature may be adjusted independently of the predetermined hot water temperature.

Provision of by-pass may also take place by providing the regulator with a bore from the district heating supply pipe stub 29 and past the district heating pressure cone 23 into the chamber 27 in the district heating seat 9 between pressure cone 23 and thermostat cone 7 or perhaps by making a small bore in the district heating pressure cone 23 itself. No matter which of these two solutions are chosen, the temperature of the by-pass function will be controlled by the thermostatic valve of the regulator and the temperature therefore depends on the predetermined hot water temperature.

A third solution may be to provide internally between the district heating supply pipe stub 29 and the district heating outlet pipe stub 26 of the regulator a small thermostatically controlled by-pass which, if so desired, may be provided with a temperature regulation.

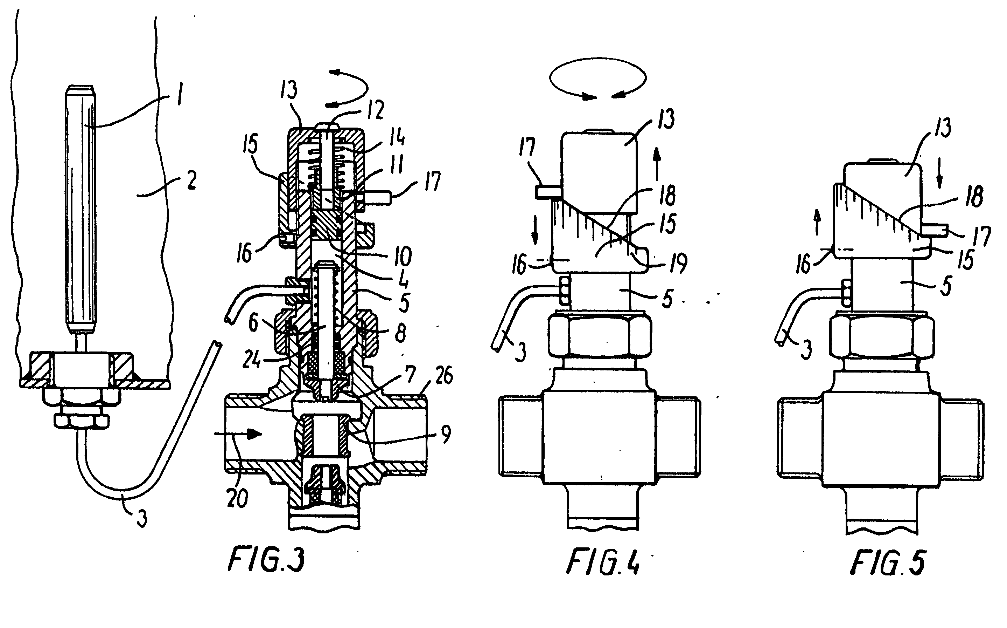

The thermostatic unit comprises, as shown in fig. 3, a housing 5 wherein adjustment equipment has been mounted at the top and valve equipment at the bottom.

The valve equipment comprises a valve body 7 cooperating with a valve seat 9 and thereby the circulation of the heat medium 20 to be regulated.

The valve body 7 is mounted on a spindle 6 which is slidable in an axially controlled manner in a packing 24 having a compression spring 8 between the free end of the spindle and the packing 24. This spring 8 maintains the valve body 7 in an open valve position.

The free part of the spindle 6 extends into a chamber 4 into which a capillary tube 3 of a sensor unit opens.

The sensor unit 1 is in the usual manner filled with liquid and the temperature conditions regulate the flow of liquid into the piston chamber in a generally known manner.

The volume of the chamber 4 may be adjusted by means of an adjustment piston 10, the position of which within the chamber 4 may be varied.

This is possible by means of a screw 12 which can be turned from outside by means of a handle 13 for changing the piston position.

The screw 12 with piston 10 is slidable out of the chamber 4 against the spring power of a compression spring 14 in such a manner that any excess pressure within the chamber will make the piston 10 slide against the spring power. This device will accordingly operate as a safety device and prevent damage to the regulator which would at worst mean a burst of the housing 5.

Turning and thereby adjustment of the volume of the chamber 4 takes place by means of the screw 12 which is in a pivotable engagement with a handle 13 extending at the top of and externally of the housing 5.

On this handle there is mounted a protruding pin or knob 17.

The object thereof is to be capable of restricting the movement of the pin 17 by means of a guide or a slide track 18, which is designed on a sleeve 15.

This sleeve 15 operates as a scale tube in that externally thereof there are provided marks 19 for the position of the pin 17 in such a manner that this device may be used for adjustment of the temperature interval of the regulator.

This is possible in that the sleeve 15 is slidably arranged on the housing 5 and can be retained in the desired position by means of a locking screw 16.

By means of this adjustment possibility various adjustments can be optionally achieved.

Fig. 1 accordingly shows a position wherein the sleeve 15 is in its middle position allowing a 180° turn of the handle 13.

In fig. 2 the sleeve 15 is in its lowest position and the handle 13 can therefore be turned 360°.

In fig. 3 the sleeve is its highest position wherein the handle 13 is locked.

The various movement patterns are indicated by arrows in the drawing.

The adjustment of the regulator takes place in the following manner.

The desired temperature is achieved by turning the adjustment handle 13 by either limiting or locking which takes place by sliding the sleeve tube 15 on the housing. This takes place by loosening the screw 16 on the lateral side of the sleeve tube and turning the sleeve to the desired position and then tighten the screw.

Limitation of a desired temperature interval takes place in a similar manner by sliding the sleeve tube 15 axially in its highest position, fig. 3, locking the adjustment handle 13 since the marking pin 17 is wedged in between two bevelled edges of the sleeve tube 15.

When the sleeve tube is locked such that the marking pin 17 is at the centre of the bevelled edges of the sleeve tube 15, the adjustment handle 13 can be turned about 180° whereas in its lowest position, fig. 2, it can be turned about 360°.

By being able to limit the temperature interval and the maximum and minimum adjustment in this manner, the thermostat may advantageously be used for many different types of regulation in heating and hot water installations, for example floor heating installations, bathing installations etc.

The thermostatic valve 1, 3, 5, 7, 13 and 17 may if desired alternatively be replaced by an electronically controlled valve engine with spindle and cone thereby achieving an electronic control of the hot water temperature.

## Claims

1. A regulator for a heat exchanger with a thermostatically controlled valve especially for use in a district heating unit where domestic water for a draw-off point is heated by heat exchanging with the hot water from the district heating source (district heating water) and comprising a termperature sensor of the kind where liquid pressure through a capillary tube impacts on the thermostatic valve for regulating the flow of the hot water through the heat exchanger in such a manner that the domestic water temperature remains independent of the flow quantity of drawn off domestic water, **characterized in that** the capillary tube (3) opens into a piston chamber (4) in a housing (5), in which chamber the valve spindle (6) is arranged in such a manner that a pressure change within the piston chamber (4) will move the spindle (6) and the valve body (7) amounted thereon relative to a valve seat (9) which is configured in the flow path for the district heating water, and that a further valve seat (22) is provided in the flow path of the district heating water, which seat coacts with a valve cone (23) for the formation of a further valve which is controlled by the flow on the inlet side for the cold domestic water to the heat exchanger in such a manner that the valve is open when water flows to the heat exchanger, and closed when no water flows to the heat exchanger.

2. A regulator according to claim 1, **characterized in that** the flow controlled further valve (22, 23) and the thermostatically controlled valve are arranged in a common housing and comprise a valve cone (23) which coacts with the valve seat (22) and are arranged on a spindle (30) which is connected to a roller diaphragm (40) which is spring loaded towards the closing position of the valve, and the movement of which controls the position of the valve, since it is connected at its two sides to the inlet and outlet side, respectively, of the housing for the cold domestic water, so that a pressure drop from the inlet side to the outlet side will make the roller diaphragm (40) cause the valve to open.

3. A regulator according to claim 2, **characterized in that** the spindle (30) also carries a slide valve body (39) which closes the passage between the inlet and the outlet side of the housing when the valve body is in closing position, and in the open position of the valve uncovers an aperture of such a size that the pressure drop over the aperture holds the valve body in open position.

4. A regulator according to claim 2, **characterized in that** the spindle (30) extends through a stuffing box (32) in the common housing.

5. A regulator according to claim 1, **characterized in that** the piston chamber (4) of the thermostatic valve is further provided with an adjustment piston (10) for adjusting the volume of the chamber (4).

6. A regulator according to claim 2, **characterized in that** the adjustment piston (10) can slide back against the spring force of a safety spring (14) if the pressure in the chamber (4) exceeds a given value.

## Patentansprüche

1. Regler für einen Wärmetauscher mit einem thermostatisch gesteuerten Ventil, insbesondere zur Anwendung in einer Femheizungseinheit, in der Haushaltswasser für einen Entnahmepunkt durch Wärmetauschen mit dem heißen Wasser der Fernheizungsquelle (Fernheizungswasser) erwärmt wird, und der einen Temperatursensor der Art aufweist, in dem ein Flüssigkeitsdruck durch eine Kapillarröhre auf das thermostatische Ventil Regein des Flusses des heißen Wassers durch den Wärmetauscher so einwirkt, dass die Haushaltswassertemperatur unabhängig von der Flussmenge des entnommenen Haushaltswassers bleibt, **dadurch gekennzeichnet, dass** die Kapillarröhre (3) in eine Kolbenkammer (4) in einem Gehäuse (5) mündet, in welcher Kammer die Ventilspindel (6) so angeordnet ist, dass eine Druckveränderung innerhalb der Kolbenkammer (4) die Spindel (6) und den darauf angebrachten Ventilkörper (7) relativ zu einem Ventilsitz (9) bewegt, der in der Flussbahn des Femheizungswassers angeordnet ist, und dass ein weiterer Ventilsitz (22) in der Flussbahn des Femheizungswassers vorgesehen ist, welcher Sitz mit einem Ventilkegel (23) zur Bildung eines weiteren Ventils zusammenwirkt, das durch den Fluss auf der Einlassseite für das kalte Haushaltswasser zu dem Wärmetauscher so gesteuert wird, dass das Ventil offen ist, wenn Wasser zu dem Wärmetauscher fließt, und geschlossen ist, wenn kein Wasser zu dem Wärmetauscher fließt.

2. Regler nach Anspruch 1, **dadurch gekennzeichnet, dass** das flussgesteuerte weitere Ventil (22, 23) und das thermostatisch gesteuerte Ventil in einem gemeinsamen Gehäuse angeordnet sind, einen Ventilkegel (23) aufweisen, der mit dem Ventilsitz (22) zusammenwirkt, und an einer Spindel (30) angeordnet sind, die mit einer Zylindermembran (40) verbunden ist, die gegen die geschlossene Position des Ventils federbelastet ist, und deren Bewegung die Position des Ventils steuert, da sie an ihren beiden Seiten mit der Einlass- bzw. Auslassseite des Gehäuses für das kalte Haushaltswasser verbunden ist, so dass ein Druckabfall von der Einlassseite zu der Auslassseite auf die Zylindermembran (40) einwirkt, das Ventil zu öffnen.

3. Regler nach Anspruch 2, **dadurch gekennzeichnet, dass** die Spindel (30) ebenfalls einen Ventilgleitkörper (39) trägt, der den Durchgang zwischen der Einlass- und der Auslassseite des Gehäuses schließt, wenn der Ventilkörper in geschlossener Position ist, und der in der offenen Position des Ventils eine Öffnung von einer derartigen Größe freigibt, dass der Druckabfall über die Öffnung den Ventilkörper in offener Position hält.

4. Regler nach Anspruch 2, **dadurch gekennzeichnet, dass** sich die Spindel (30) durch eine Stopfbuchse (32) in dem gemeinsamen Gehäuse erstreckt.

5. Regler nach Anspruch 1, **dadurch gekennzeichnet, dass** die Kolbenkammer (4) des thermostatischen Ventils ferner mit einem Einstellungskolben (10) zum Einstellen des Volumens der Kammer (4) versehen ist.

6. Regler nach Anspruch 2, **dadurch gekennzeichnet, dass** der Einstellungskolben (10) gegen die Federkraft einer Sicherheitsfeder (14) zurückgeführt werden kann, wenn der Druck in der Kammer (4) einen vorgegebenen Wert überschreitet.

## Revendications

1. Régulateur pour un échangeur thermique avec une valve régulée thermostatiquement, en particulier pour être utilisé dans une unité de chauffage urbain, dans lequel de l'eau domestique pour un point de soutirage est chauffée par échange de chaleur avec l'eau chaude provenant de la source de chauffage urbain (eau chaude urbaine) et comprenant un capteur de température du type dans lequel la pression du liquide au travers d'un tube capillaire vient impacter la valve thermostatique pour réguler le débit d'eau chaude au travers de l'échangeur thermique de manière que la température de l'eau domestique reste indépendante de la quantité d'eau domestique soutirée, **caractérisé en ce que** le tube capillaire (3) s'ouvre dans une chambre de piston (4) dans un logement (5), chambre dans laquelle la tige de valve (6) est disposée de manière qu'une variation de pression dans la chambre de piston (4) déplace la tige (6) et le corps de valve (7) monté sur elle par rapport à un siège de valve (9), qui est configuré dans le circuit de débit pour l'eau chaude urbaine, et **en ce qu'**un siège de valve supplémentaire (22) est disposé dans le circuit de débit de l'eau chaude urbaine, lequel siège co-agit avec un cône de valve (23) pour la formation d'une valve supplémentaire qui est régulée par le débit du côté entrée de l'eau froide domestique vers l'échangeur de chaleur de manière que la valve est ouverte lorsque l'eau circule vers l'échangeur thermique, et fermée lorsqu'il n'y a pas de débit d'eau vers l'échangeur thermique.

2. Régulateur selon la revendication 1, **caractérisé en ce que** la valve supplémentaire contrôlée en débit (22, 23) et la valve régulée thermostatiquement sont disposées dans un logement commun et comprennent un cône de valve (23) qui co-agit avec le siège de valve (22) et sont disposées sur une tige (30) qui est connecté à un diaphragme à rouleau (40) qui est chargé par ressort vers la position fermée de la valve, et dont le mouvement contrôle la position de la valve, dans la mesure où il est connecté à ses deux extrémités aux côtés entrée et sortie, respectivement, du logement pour l'eau froide domestique, de sorte qu'une chute de pression du côté entrée vers le côté sortie fait que le diaphragme à rouleau (40) ouvre la valve.

3. Régulateur selon la revendication 2, **caractérisé en ce que** la tige (30) porte également un corps de valve coulissant (39) qui ferme le passage entre le côté entrée et le côté sortie du logement lorsque le corps de valve est en position fermée, et dans la position ouverte de la valve découvre une ouverture d'une taille telle que la chute de pression sur l'ouverture maintient le corps de valve en position ouverte.

4. Régulateur selon la revendication 2, **caractérisé en ce que** la tige (30) s'étend au travers d'un presse-étoupe (32) dans le logement commun.

5. Régulateur selon la revendication 1, **caractérisé en ce que** la chambre du piston (4) de la valve thermostatique est en outre dotée d'un piston d'ajustement (10) pour ajuster le volume de la chambre (4).

6. Régulateur selon la revendication 2, **caractérisé en ce que** le piston d'ajustement (10) peut coulisser en arrière contre la force du ressort d'un ressort de sécurité (14) si la pression dans la chambre (4) dépasse une valeur donnée.
